# EUROPÄISCHE PATENTSCHRIFT

(11) **EP 3 074 235 B1**
(45) Veröffentlichungstag und Bekanntmachung des Hinweises auf die Patenterteilung: **28.03.2018**
(21) Anmeldenummer: 14777264.4
(22) Anmeldetag: 24.09.2014
(51) Int. Cl.: B42D 25/29, B42D 25/355, B42D 25/00, B42D 25/475, B42D 25/435, B29C 65/74, B42D 25/455

(54) **SICHERHEITSELEMENT UND VERFAHREN ZU DESSEN HERSTELLUNG**
SECURITY ELEMENT AND METHOD OF ITS PRODUCTION
ÉLÉMENT DE SÉCURITÉ ET PROCÉDÉ DE SA FABRICATION

(30) Priorität: 27.11.2013 DE 102013019942
(43) Veröffentlichungstag der Anmeldung: 05.10.2016
(73) Patentinhaber: Giesecke+Devrient Currency Technology GmbH, 81677 München (DE)
(72) Erfinder: ENGELMANN, Patrick, 83727 Schliersee (DE); MAYER, Hans-Jürgen, 83093 Bad Endorf (DE)
(86) Internationale Anmeldenummer: PCT/EP2014/002594
(87) Internationale Veröffentlichungsnummer: WO 2015/078542

(56) Entgegenhaltungen:
- WO-A1-93/23796
- US-A- 5 502 292
- US-A- 6 103 050

## Beschreibung

Die Erfindung betrifft ein Verfahren zum Herstellen eines Sicherheitselements für Sicherheitspapiere, Wertdokumente und andere Datenträger. Die Erfindung betrifft auch ein Sicherheitselement, das nach einem derartigen Verfahren hergestellt ist, und einen Datenträger, insbesondere ein Sicherheitspapier oder einen Wertgegenstand, mit einem solchen Sicherheitselement.

Datenträger, wie z.B. Wertdokumente, weisen häufig ein lang gestrecktes Sicherheitselement in Form eines sogenannten Sicherheitsfadens auf, der bevorzugt über die gesamte Breite der Banknote verläuft und entweder vollständig oder zumindest teilweise in das Banknotenpapier eingebettet ist. Für die Herstellung einer solchen Banknote wird in einem kontinuierlichem Verfahren eine breite Papierbahn gebildet, in die während der Blattbildung die Sicherheitsfäden kontinuierlich ganz oder teilweise eingebettet werden.

Ein solcher in einer Banknote eingebetteter Sicherheitsfaden weist typischerweise eine erste Folienlage und eine über der ersten Folienlage angeordnete zweite Folienlage auf, wobei zwischen der ersten und zweiten Folienlage ein oder mehrere Sicherheitsmerkmale angeordnet sind, die den Sicherheitsfaden und die den Sicherheitsfaden aufweisende Banknote vor Fälschung und Nachahmung schützen sollen. Die erste Folienlage des Sicherheitsfadens wird häufig als Trägerfolie und die zweite Folienlage häufig als Deckfolie bezeichnet.

Üblicherweise werden die Sicherheitsfäden aus einer flächigen Folienbahn mittels einer geeigneten Schneidvorrichtung, insbesondere einem Messer, in der vorbestimmten Abmessung, insbesondere vorbestimmten Breite herausgeschnitten. Nachteilig daran ist, dass Flüssigkeiten, z.B. korrosive Substanzen relativ leicht in den Randbereich des Sicherheitsfadens eindringen können und so insbesondere das zwischen den beiden Folien angeordnete Sicherheitsmerkmal verändern oder sogar zerstören können. Die Veränderung oder Zerstörung des Sicherheitsmerkmals des Sicherheitsfadens bedeutet eine erhebliche Verringerung des Schutzes gegen Fälschung und Nachahmung für den Sicherheitsfaden bzw. den mit dem Sicherheitsfaden ausgestatteten Datenträger. Ferner ist aus der Schrift WO93/23796A ein Verfahren mit den Merkmalen des Oberbegriffs des Anspruchs 1 bekannt. Ausgehend davon liegt der Erfindung die Aufgabe zugrunde, ein vorteilhaftes Verfahren zur Herstellung eines Sicherheitselements der eingangs genannten Art anzugeben und die Nachteile des Standes der Technik zu vermeiden. Diese Aufgabe wird durch die Merkmale der unabhängigen Ansprüche gelöst. Weiterbildungen der Erfindung sind Gegenstand der abhängigen Ansprüche.

Gemäß der Erfindung ist ein Verfahren mit den Merkmalen des Anspruchs 1.

Das erfindungsgemäße Verfahren sieht also im Wesentlichen vor, die bereitgestellte Folienbahn mit Laserstrahlung derart zu beaufschlagen, dass die Folienbahn in den vorgegebenen Abmessungen des Sicherheitselements vollständig durchtrennt wird und gleichzeitig die erste und zweite Folienlage der Folienbahn in einem Randbereich des aus der Folienbahn herausgetrennten Sicherheitselements mit einander verbunden werden. Im Rahmen der vorliegenden Erfindung wird sowohl ein aus der Folienbahn in den vorgegebenen Abmessungen herausgetrenntes Element als Sicherheitselement bezeichnet, als auch ein Element, das durch einen nachfolgenden Zuschnitt des aus der Folienbahn herausgetrennten Elements noch auf die vorgesehene Größe, insbesondere Länge zugeschnitten wird, um beispielsweise auf oder in einem einzelnen Datenträger angeordnet zu werden. Mit anderen Worten umfasst der Begriff "Sicherheitselement" im Rahmen der vorliegenden Anmeldung sowohl ein erfindungsgemäß aus der Folienbahn erzeugtes Element, insbesondere endloses Element, als auch ein in der vorbestimmten Größe, insbesondere ein in der vorbestimmten Länge auf oder in einem Datenträger angeordnetes Sicherheitselement.

Die Verbindung der ersten und zweiten Folienlage im Randbereich des Sicherheitselements schützt den Folienaufbau des Sicherheitselements in vorteilhafter Weise in dem besonders gefährdeten Randbereich, was eine erhebliche Verbesserung der Beständigkeit des Sicherheitselements bedeutet. Darüber hinaus ist die Durchtrennung der Folienbahn mittels Laserstrahlung mit einer wesentlich geringeren mechanischen Belastung des Sicherheitselements insbesondere im Randbereich verbunden, was die Beständigkeit des Sicherheitselements gegenüber den aus dem Stand der Technik bekannten und mit Hilfe von z.B. Schneidmessern erzeugten Sicherheitselementen weiter verbessert. Die sich durch die erfindungsgemäße Verbindung der beiden Folienlagen ergebenden Vorteile werden durch eine besonders zuverlässige und wirtschaftliche Herstellung des Sicherheitsfadens aus der Folienbahn mittels Laserbeaufschlagung ergänzt. Erfindungsgemäss ist vorgesehen, dass die erste und zweite Folienlage des Sicherheitselements im Wesentlichen flüssigkeitsdicht miteinander verbunden, nämlich miteinander verschweißt werden. Die Formulierung "im Wesentlichen flüssigkeitsdicht miteinander verbunden" umfasst auch solche Varianten, bei denen die Verbindung der Folienlagen im Randbereich einzelne und produktionstechnisch nicht immer vollständig zu vermeidende Unterbrechungen aufweist. Es versteht sich aber, dass die Verbindung der ersten und zweiten Folienlage idealerweise entlang des gesamten Randbereichs des Sicherheitselements ohne Unterbrechung vorhanden ist und somit das Eindringen von Flüssigkeiten im gesamten Randbereich verhindert. Die Verbindung der ersten und zweiten Folienlage schützt das Sicherheitselement somit vor dem Eindringen von Flüssigkeiten, insbesondere korrosiven Flüssigkeiten, wie z.B. Säuren oder Laugen, die das zwischen den beiden Folienlagen angeordnete Sicherheitsmerkmal verändern oder sogar zerstören können. Die Verbindung der beiden Folienlagen erfolgt durch Verschweißen, wobei der Begriff "Verschweißen" ein Schmelzen und anschließendes Erstarren der beiden Folienlagen im Verbindungsbereich mit einschließt.

Die Folienlagen werden im Randbereich so miteinander verbunden, dass eine Verdickung gebildet wird, deren Abmessung in einer Richtung senkrecht zur Ebene des Sicherheitselements bevorzugt um 1 % bis 100 % größer als die mittlere Dicke des Sicherheitselements ist. Die durch die Verbindung der beiden Folienlagen im Randbereich des Sicherheitselements gebildete Verdickung weist somit eine durch die Verfahrensparameter steuerbare Dicke auf, welche mitunter erheblich über der mittleren Dicke des Sicherheitselements liegen kann. Die Gründe dafür sind, ohne an eine bestimmte Erklärung gebunden zu sein, vermutlich in der mit dem Aufschmelzen der Folienbahnen verbundenen Auflösung und Neubildung der Folienstruktur im Verbindungsbereich zu sehen. Die Verdickung ist bei ausreichender Dicke daher auch als tastbares zusätzliches Sicherheitsmerkmal des Sicherheitselements anzusehen. Gegebenenfalls kann die Verdickung auch bei einem in einem Datenträger, insbesondere papierbasierten Wertdokument, angeordnetem Sicherheitselement durch den Datenträger hindurch tastbar sein, insbesondere wenn der Datenträger im Verdickungsbereich des Sicherheitselements ebenfalls verdickt ist.

Besonders bevorzugt ist es, dass die flächige Folienbahn in einem Endlosverfahren als Endlosfolie bereitgestellt und das Sicherheitselement als Endlosfolie, insbesondere als endloser Sicherheitsfaden erzeugt wird. Ein solcher kontinuierlicher Prozess ist besonders wirtschaftlich und ermöglicht die Bereitstellung erfindungsgemäßer Sicherheitselemente in großen Mengen. Das Endlosverfahren wird insbesondere zur Herstellung endloser Sicherheitsfäden das bevorzugte Verfahren sein, wenngleich es selbstverständlich möglich ist, erfindungsgemäße Sicherheitselemente auch in nicht kontinuierlichen Verfahren zu erzeugen.

Mit Vorteil erfolgt die Laserbeaufschlagung mit einer Vielzahl an Laserstrahlen, so dass aus der bereitgestellten Folienbahn in einem Verfahrensschritt eine Vielzahl an Sicherheitselementen gleichzeitig erzeugt werden kann. Die Vorsehung einer Vielzahl an Laserstrahlen kann mit besonderem Vorteil mit einem Endlosverfahren kombiniert werden, wodurch sich ein extrem wirtschaftliches Produktionsverfahren zur Herstellung der erfindungsgemäßen Sicherheitselemente ergibt.

Gemäß einer weiteren bevorzugten Verfahrensvariante ist vorgesehen, dass die Laserbeaufschlagung mit einem Infrarot-Laser im Wellenlängenbereich von 3 µm bis 12 µm, bevorzugt von 9,2 µm bis 10,6 µm erfolgt. Bevorzugterweise erfolgt die Beaufschlagung dabei mit einem CO₂-Laser insbesondere bei einer Wellenlänge von 10,6 µm. Der Einsatz eines Infrarot-Lasers im vorstehend genannten Wellenlängenbereich ermöglicht die zuverlässige Herstellung der erfindungsgemäßen Sicherheitselemente.

Die Erfindung umfasst auch ein Sicherheitselement mit den Merkmalen des Anspruchs 5. In der Erfindung weist das Sicherheitselement eine Verbindung der ersten und zweiten Folienlage auf, die flüssigkeitsdicht ist. Wie bereits erwähnt, ergibt sich dadurch ein wesentlicher Vorteil der Erfindung, nämlich der Schutz vor dem Eindringen von Flüssigkeit, insbesondere von korrosiven Flüssigkeiten, und damit Schutz vor der mit dem Eindringen einhergehenden Beeinträchtigung des zwischen den Folienlagen angeordneten wenigstens einen Sicherheitsmerkmals. Daher ist der Schutz vor Fälschungen durch das erfindungsgemäße Sicherheitselement auch bei Beaufschlagung des Sicherheitselements mit korrosiven Flüssigkeiten sichergestellt.
Die Verbindung der ersten und zweiten Folienlage im Randbereich des Sicherheitselements ist eine Verdickung, deren Abmessung in einer Richtung senkrecht zur Ebene des Sicherheitselements um bevorzugt 1 % bis 100 % größer als die mittlere Dicke des Sicherheitselements ist. Das Sicherheitselement kann aufgrund der Verdickung im Randbereich somit auch haptisch erfasst werden.

Vorteilhafterweise ist die erste und/ oder die zweite Folienlage ein polymeres Material, insbesondere ein Kunststofffolie aus PET, PP, PE, LDPE, LLDPE, PA, PC, BOPP, PVC, PU, UV-vernetzenden Lackschichten oder natürlichen Biopolymeren. Von den genannten Materialien ist derzeit eine Polyesterfolie besonders bevorzugt, da sie sich durch Laserbeaufschlagung besonders formstabil verarbeiten lässt, d.h. die Verbindung im Randbereich des Sicherheitselements eine besonders definierte Form aufweist. Bevorzugt ist die erste und/ oder zweite Folienlage eine transluzente oder transparente Folie.
Im Rahmen der vorliegenden Beschreibung bedeutet "transluzent" durchscheinend im Sinn einer gewissen oder vollständigen Lichtdurchlässigkeit und schließt somit letztlich auch Transparenz mit ein. Eine transluzente Schicht erlaubt es, die hinter bzw. unter ihr befindlichen Objekte wahrzunehmen, auch wenn durch die transluzente Schicht die Helligkeit der Objekte reduziert und/ oder die Farbe der Objekte verändert sein kann. Ist die Lichtdurchlässigkeit einer Schicht dagegen so gering, dass die hinter bzw. unter ihr befindlichen Objekte nicht mehr erkennbar sind, ist sie nicht mehr transluzent, sondern wird als opak oder deckend bezeichnet.

Transluzente oder sogar transparente Folienlagen haben den Vorteil, dass das zwischen den Folienlagen eingebettete Sicherheitsmerkmal von einem Betrachter des Sicherheitselements besonders gut und, sofern keine anderen opaken Schichten die Sicht stören, von beiden Seiten des Sicherheitselements wahrgenommen werden kann. Ein solches Sicherheitselement weist einen besonders hohen Wiedererkennungswert und damit eine besonders große Fälschungssicherheit auf.

In einer zweckmäßigen Ausgestaltung weist die erste Folienlage des Sicherheitselements eine Dicke von 10 µm bis 20 µm und bevorzugt von 12 µm bis 15 µm auf. Die erste Folienlage, die bei dem Sicherheitselement als Trägerfolie fungiert, ist mit der vorstehend angegebenen Dicke ausreichend stabil, um das wenigstens eine Sicherheitsmerkmal des Sicherheitselements dauerhaft auf der Trägerfolie anzuordnen.

In einer anderen zweckmäßigen Ausgestaltung weist die zweite Folienlage eine Dicke von 1 µm bis 12 µm, bevorzugt von 2 µm bis 8 µm und ganz besonders bevorzugt von 4 µm bis 6 µm auf. Die zweite Folienlage, die als Deckfolie im Aufbau des Sicherheitselements fungiert, muss keine tragende Funktion ausüben und kann daher dünner als die erste Folienlage ausgebildet sein. Andererseits muss die zweite Folienlage mit der ersten Folienlage im Randbereich des Sicherheitselements eine Verbindung, insbesondere eine flüssigkeitsdichte Verbindung eingehen, so dass der vorstehend spezifizierte Dickenbereich sich in der Praxis als besonders zweckmäßig erwiesen hat.

Da das Sicherheitselement neben der ersten und zweiten Folienlage und dem zwischen den beiden Folienlagen angeordneten wenigstens einen Sicherheitsmerkmal in der Regel noch einige andere Schichten, insbesondere Klebeschichten, Heißsiegellackschichten, Farbschichten, Schutzlackschichten und Haftvermittlerschichten, aufweist, kann bei der Vorsehung einer ersten Folienlage mit einer Dicke von 10 µm bis 20 µm und einer zweiten Folienlage mit einer Dicke von 1 µm bis 12 µm ein Sicherheitselement bereitgestellt werden, dessen Gesamtdicke zwischen ca. 12 µm und ca. 60 µm liegt. Ganz besonders bevorzugt ist ein Sicherheitselement, dessen Gesamtdicke ca. 20 µm bis ca. 55 µm beträgt. Sicherheitselemente mit der vorstehend erwähnten Gesamtdicke sind ausreichend stabil, insbesondere um gut auf oder zumindest teilweise in einem Datenträger, insbesondere einem papierbasiertem Wertdokument, eingebracht zu werden und verändern aufgrund der nicht zu großen Gesamtdicke die Eigenschaften des Datenträgers, insbesondere seine Biegefestigkeit und Stabilität, nicht zu sehr.

Mit Vorteil umfasst das Sicherheitselement ein Sicherheitsmerkmal aus einem Material, das ausgewählt ist aus der Gruppe der Metalle, Metallverbindungen, Legierungen, Metalllacke, Metalltinten oder metallisch erscheinenden Lacke. Zusätzlich oder alternativ kann das Sicherheitsmerkmal ein elektrisch leitfähiges oder magnetisches Material umfassen. Alle vorstehend genannten Materialien lassen sich technisch relativ präzise zwischen erster und zweiter Folienlage anordnen und bieten zugleich einen verhältnismäßig guten Schutz gegen Fälschung und Nachahmung des Sicherheitselements bzw. des mit dem Sicherheitselement gekennzeichneten Datenträgers. Die genannten bevorzugten Materialien können mit allen dafür geeigneten Verfahren zwischen erster und zweiter Folienlage angeordnet werden. Dies kann z.B. durch Beschichtungs-, Druckverfahren oder physikalische/chemische Gasphasenabscheidung erfolgen.

Darüber hinaus ist es bevorzugt, wenn das Sicherheitsmerkmal Pigmente, insbesondere Flüssigkristallpigmente oder optisch variable Interferenzpigmente, einen optisch variablen Dünnschichtaufbau, insbesondere einen drei- oder mehrschichtigen Aufbau, eine Beugungsstruktur, eine Anordnung von Mikrolinsen, Mikrospiegeln und/oder Mikroaufdrucken aufweist. Im Rahmen der vorliegenden Anmeldung wird ein Sicherheitsmerkmal bzw. das das Sicherheitsmerkmal umfassende Sicherheitselement dann als optisch variabel bezeichnet, wenn zumindest eine der optischen Eigenschaften, insbesondere der Farbton, die Helligkeit, die Farbsättigung oder das Reflektionsvermögen des betrachteten Farbbereichs, sich im sichtbaren Wellenlängenbereich von ca. 380 nm bis ca. 780 nm mit dem Betrachtungswinkel verändert. Darüber hinaus können sämtliche Sicherheitsmerkmale zusätzlich oder alternativ veränderliche oder nicht veränderliche optische Eigenschaften im nicht sichtbaren Wellenlängenbereich von kleiner 380 nm oder größer 780 nm aufweisen. Solche Eigenschaften im nicht sichtbaren Wellenlängenbereich können relativ zuverlässig mit geeigneten technischen Vorrichtungen erfasst werden. Man spricht dann von sogenannten maschinenlesbaren Sicherheitsmerkmalen. Als Beispiel für solche Sicherheitsmerkmale, die im nicht sichtbaren Wellenlängenbereich sicherheitsrelevante Eigenschaften aufweisen, sollen an dieser Stelle lumineszierende Materialien, insbesondere fluoreszierende oder phosphoreszierende Materialien, genannt werden.

Bezüglich der Anordnung der Sicherheitsmerkmale ist noch zu erwähnen, dass erfindungsgemäß zumindest ein Sicherheitsmerkmal zwischen der ersten und zweiten Folienlage angeordnet sein muss. Selbstverständlich können die gleichen oder aber andere Sicherheitsmerkmale auch an einer anderen Position als zwischen der ersten und zweiten Folienlage angeordnet sein, beispielsweise auf der der zweiten Folienlage abgewandten Seite der ersten Folienlage. Das erfindungsgemäße Konzept wird also durch zusätzliche Anordnung von Sicherheitsmerkmalen an beliebiger Stelle des Sicherheitselements nicht verlassen, solange zumindest ein Sicherheitsmerkmal zwischen der ersten und zweiten Folienlage angeordnet ist.

In einer vorteilhaften Ausgestaltung ist ferner vorgesehen, dass das Sicherheitselement im Randbereich nicht geradlinig, insbesondere mäanderförmig, geschwungen oder gezackt begrenzt ist. Eine solche nicht geradlinige Begrenzung des Sicherheitselementes ist durch den erfindungsgemäßen Einsatz von Laserstrahlung zur Herstellung der Sicherheitselemente möglich, da durch geeignete Strahlführung praktisch jede beliebige und vorgegebene Randkontur erzeugt werden kann. In vorteilhafter Weise wird durch eine solche nicht geradlinige Begrenzung des Sicherheitselementes ein zusätzliches Sicherheitsmerkmal geschaffen, da mittels der Randkontur des Sicherheitselementes eine Codierung, z.B. die Wertzahl oder die Nennwertbezeichnung des mit dem Sicherheitselement ausgestatteten Datenträgers dargestellt werden kann.

Die Erfindung umfasst weiter einen Datenträger mit einem Sicherheitselement der beschriebenen Art. Dabei kann das Sicherheitselement z.B. auf dem Datenträger aufgebracht oder aber teilweise oder vollständig in dem Datenträger angeordnet sein. Bei dem Datenträger kann es sich insbesondere um eine Banknote, insbesondere eine Papierbanknote, vorzugsweise eine Baumwoll-Papierbanknote, eine Polymerbanknote oder eine Folien-Papier-Verbundbanknote handeln. Letztere weist vorzugsweise eine Schichtenfolge: Folie/Papier/Folie oder Papier/Folie/Papier auf. Der Datenträger kann auch eine Ausweiskarte darstellen, insbesondere eine Kreditkarte, eine Bankkarte, eine Barzahlungskarte, eine Berechtigungskarte, einen Personalausweis, einen Pass oder eine Pass-Personalisierungsseite.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung eines erfindungsgemäßen Siheitselements in Aufsicht,
- Fig. 2: das Sicherheitselement der Fig.1 schematisch im Querschnitt entlang der Linie B-B in Fig. 1, und
- Fig. 3: eine schematische Darstellung des erfindungsgemäßen Verfahrens zur Erläuterung des Arbeitsprinzips zur Herstellung eines erfindungsgemäßen Sicherheitselements.

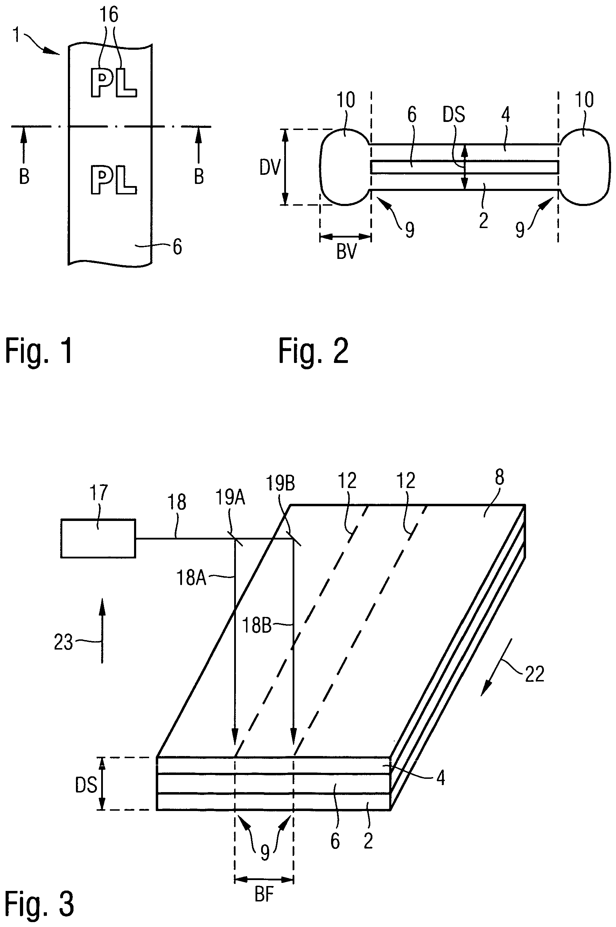

Die Erfindung wird nun am Beispiel eines Sicherheitselements für Banknoten und andere Wertdokumente erläutert. Fig. 1 zeigt dazu in Aufsicht eine schematische Darstellung eines lang gestreckten Sicherheitselementes in Form eines Sicherheitsfadens. Gemäß Fig.1 handelt es sich um die Aufsicht auf einen Ausschnitt aus einem erfindungsgemäßen und als Endlosmaterial vorliegenden Sicherheitsfaden.

Der Sicherheitsfaden 1 weist als Sicherheitsmerkmal 6 eine metallische Beschichtung auf, bei der es sich z.B. um eine mittels physikalischer Gasphasenabscheidung (PVD) aufgebrachte Metallschicht handeln kann. Im Sicherheitsmerkmal 6 sind ferner Aussparungen 16 angeordnet, bei denen es sich um metallschichtfreie Bereiche handelt. Die Aussparungen 16 wurden mittels eines geeigneten Verfahrens, insbesondere durch Auswaschen der Metallschicht 6 oder durch ein Ätzverfahren erzeugt.

Darüber hinaus weist der Sicherheitsfaden gemäß Fig.1 weitere transparente oder transluzente Schichten auf, die als zusätzliche Sicherheitsmerkmale und/oder als für die Anordnung auf bzw. in einen Datenträger erforderliche Schichten ausgebildet sind, und der Übersichtlichkeit halber in Fig. 1 nicht dargestellt wurden.

In Fig. 2 ist der Querschnitt durch den Sicherheitsfaden 1 entlang der Linie B-B in Fig.1 dargestellt. In der Querschnittsdarstellung ist die Anordnung des Sicherheitsmerkmals 6 zwischen der ersten Folienlage 2 und der zweiten Folienlage 4 zu erkennen. Darüber hinaus ist zu erkennen, dass der Sicherheitsfaden 1 in einem Randbereich 9 eine Verdickung 10 aufweist, die durch die Laserbeaufschlagung der Folienbahn 8 bei der Heraustrennung des Sicherheitsfadens aus der Folienbahn 8 erzeugt wurde. Die Verdickung 10 weist eine Dicke DV auf, die ca. 60 % größer als die mittlere Dicke DS des Sicherheitselements ist.

Mit Bezug auf Fig. 3 wird nun die Herstellung eines erfindungsgemäßen Sicherheitselements 1 aus einer flächigen Folienbahn 8 erläutert. Bei der flächigen Folienbahn 8 handelt es sich um eine Endlosfolie, die in einem Endlosverfahren von z.B. einer Rolle abgewickelt und in den für die Laserbeaufschlagung vorgesehenen Bereich bewegt wird. Die Folienbahn 8 umfasst die Folienlagen 2 und 4 sowie das dazwischen angeordnete Sicherheitselement 6, das sich über die gesamte Fläche der Folienbahn 8 erstreckt und bei dem es sich um die metallische Beschichtung 6 mit Aussparungen 16 handelt (siehe Fig. 1). Die erste Folienlage 2 mit einer Foliendicke von ca. 14 µm fungiert als Trägerfolie, während die zweite Folienlage 4 mit einer Foliendicke von ca.

6 µm als Deckfolie fungiert. Die Breite der Verdickung BV beträgt in der Praxis ca. 20 µm bis 60 µm. Die Gesamtdicke des Faden DS liegt im Bereich von ca. 20 µm bis 60 µm, bevorzugt von ca. 25 µm bis 50 µm, und insbesondere bevorzugt von ca. 30 µm bis 45 µm. Die Breite BF beträgt typischerweise 1 mm bis 20 mm, bevorzugt ca. 2 mm bis 8 mm.

Die Vorschubrichtung der Endlosfolie 8 ist in Fig. 3 mit dem Bezugszeichen 22 versehen. Durch die Bewegung der Folienbahn 8 in Richtung 22 wird diese von der Laserstrahlung 18, die mittels des stationären Lasers 17 erzeugt wird, beaufschlagt. Im gezeigten Beispiel gemäß Fig. 3 wird ein CO₂-Laser der Wellenlänge von 10,6 µm eingesetzt. Der Laserstrahl 18 des Lasers 17 wird durch die Spiegel 19A und 19B in zwei Laserstrahlen 18A und 18B aufgeteilt. Die Folienbahn 8 wird somit im Durchtrennungsbereich 12 von den Laserstrahlen 18A und 18B beaufschlagt, so dass das Sicherheitselement in Form eines endlosen Sicherheitsfadens 1 der Breite BF aus der Folienbahn 8 herausgetrennt wird. Die Beaufschlagung der Folienbahn 8 mit der Laserstrahlung 18A und 18B führt nämlich in den vorgegebenen Abmessungen des Sicherheitselements, d.h. im Durchtrennungsbereich 12 zu einer vollständigen Durchtrennung der Folienbahn 8. Gleichzeitig wird in dem so aus der Folienbahn 8 herausgelösten Sicherheitselement 1 im Randbereich 9 die erste Folienlage 2 und die zweite Folienlage 4 durch Aufschmelzen der Folien und nachfolgendes Erstarren miteinander verbunden. Dadurch wird in einem kontinuierlichen Verfahren die Verdickung 10 erzeugt, die in Fig. 2 schematisch dargestellt ist.

Es versteht sich, dass die Verdickung 10 idealisiert mit definierter Form in Fig. 2 dargestellt ist, wenngleich die Verdickung in der Praxis abhängig von den gewählten Laserparametern, wie Laserenergie, Pulsdauer , sowie den Verfahrensparametern, wie z.B. Vorschubgeschwindigkeit der Folienbahn 8 und Richtung der Laserbeaufschlagung relativ zur Flächennormalen 23 der Folienbahn 8 abhängt. Selbstverständlich hängt die Form und Größe der Verdickung 10 auch von den für die erste und zweite Folienlage gewählten Materialien und von den gegebenenfalls zwischen der ersten und zweiten Folienbahn bzw. auf der ersten und/ oder zweiten Folienbahn angeordneten weiteren Schichten, wie Kleber- oder Haftvermittlungsschichten, ab, da diese im Randbereich 9 des Sicherheitselementes Einfluss auf die physikalischen und gegebenenfalls chemischen Prozesse bei der Ausbildung der Verdickung 10 nehmen können. Z.B. kann eine Heißsiegellackschicht im Randbereich des Sicherheitselements bei der Laserbeaufschlagung schmelzen und dabei ein Teil der Verdickung werden oder Einfluss auf die Form und Größe der Verdickung nehmen. Einfluss auf die Form der Verdickung hat darüber hinaus auch die Gravitationskraft, da diese die Folienlagen 2 und 4 im Randbereich 9 des Sicherheitselements 1 in einem flüssigen Zustand (während der Laserbeaufschlagung) in eine bestimmte Richtung verformen kann.

Der gemäß dem erfindungsgemäßen Verfahren nach Fig. 3 erhaltene endlose Sicherheitsfaden 1 wird mittels einer geeigneten Schneidvorrichtung, bei der es sich ebenfalls um eine Laserstrahlquelle handeln kann, in die endgültige Form, insbesondere die endgültige Länge geschnitten und auf den Datenträger aufgebracht, bzw. beispielsweise in eine Papierbanknote teilweise oder vollständig eingebracht. Für den Fall, dass der Sicherheitsfaden 1 mittels einer Laserstrahlquelle und Laserbeaufschlagung auf Länge geschnitten wird, ist das erfindungsgemäße Konzept, d.h. die Verbindung von erster und zweiter Folienlage für den Sicherheitsfaden entlang sämtlicher den Faden begrenzender Kanten realisiert.

## Patentansprüche

1. Verfahren zum Herstellen eines Sicherheitselements für Sicherheitspapiere, Wertdokumente und andere Datenträger, bei dem
- eine flächige Folienbahn bereitgestellt wird, die eine erste Folienlage, eine über der ersten Folienlage angeordnete zweite Folienlage und wenigstens ein zwischen der ersten und zweiten Folienlage angeordnetes und sich im Wesentlichen über die gesamte Fläche der Folienbahn erstreckendes Sicherheitsmerkmal aufweist,
- die Folienbahn mit Laserstrahlung derart beaufschlagt wird, dass die Folienbahn in den vorgegebenen Abmessungen des Sicherheitselements vollständig durchtrennt wird und gleichzeitig die erste und zweite Folienlage in einem Randbereich des aus der Folienbahn herausgetrennten Sicherheitselements miteinander verbunden werden,
- die erste und zweite Folienlage des Sicherheitselements im Wesentlichen flüssigkeitsdicht miteinander verbunden, nämlich miteinander verschweißt werden, **dadurch gekennzeichnet, dass**
- die Folienlagen im Randbereich so miteinander verbunden werden, dass eine Verdickung gebildet wird, deren Abmessung in einer Richtung senkrecht zur Ebene des Sicherheitselements bevorzugt um 1 % bis 100 % größer als die mittlere Dicke des Sicherheitselements ist.

2. Verfahren nach Anspruch 1, **dadurch gekennzeichnet, dass** die flächige Folienbahn in einem Endlosverfahren als Endlosfolie bereitgestellt und das Sicherheitselement als Endlosfolie, insbesondere als endloser Sicherheitsfaden, erzeugt wird.

3. Verfahren nach wenigstens einem der Ansprüche 1 oder 2, **dadurch gekennzeichnet, dass** die Laserbeaufschlagung mit einer Vielzahl an Laserstrahlen erfolgt und aus der Folienbahn in einem Verfahrensschritt eine Vielzahl an Sicherheitselementen erzeugt wird.

4. Verfahren nach wenigstens einem der Ansprüche 1 bis 3, **dadurch gekennzeichnet, dass** die Laserbeaufschlagung mit einem Infrarotlaser im Wellenlängenbereich von 3 µm bis 12 µm, bevorzugt von 9,2 µm bis 10,6 µm, insbesondere mit einem CO₂-Laser erfolgt.

5. Sicherheitselement zur Absicherung von Sicherheitspapieren, Wertdokumenten und anderen Datenträgern, hergestellt nach einem der Ansprüche 1 bis 4, mit,
- einer ersten Folienlage, eine über der ersten Folienlage angeordneten zweiten Folienlage und wenigstens einem zwischen der ersten und zweiten Folienlage angeordneten Sicherheitsmerkmal,
- wobei die erste und zweite Folienlage in einem Randbereich des Sicherheitselements mittels Laserbeaufschlagung miteinander verbunden sind,
- die Verbindung der ersten und zweiten Folienlage des Sicherheitselements flüssigkeitsdicht ist, **dadurch gekennzeichnet, dass**
- die Verbindung der ersten und zweiten Folienlage eine Verdickung ist, deren Abmessung in einer Richtung senkrecht zur Ebene des Sicherheitselements um bevorzugt 1 % bis 100 % größer als die mittlere Dicke des Sicherheitselements ist.

6. Sicherheitselement nach Anspruch 5, **dadurch gekennzeichnet, dass** die erste und/ oder die zweite Folienlage ein polymeres Material, insbesondere eine Kunststofffolie aus PET, PP, PE, LDPE, LLDPE, PA, PC, BOPP, PVC, PU, UV-vernetzenden Lackschichten oder natürlichen Biopolymeren ist.

7. Sicherheitselement nach wenigstens einem der Ansprüche 5 oder 6, **dadurch gekennzeichnet, dass** die erste und/ oder die zweite Folienlage eine transluzente oder transparente Folie ist.

8. Sicherheitselement nach wenigstens einem der Ansprüche 5 bis 7, **dadurch gekennzeichnet, dass** die erste Folienlage eine Dicke von 10 µm bis 20 µm, bevorzugt von 12 µm bis 15 µm aufweist.

9. Sicherheitselement nach wenigstens einem der Ansprüche 5 bis 8, **dadurch gekennzeichnet, dass** die zweite Folienlage eine Dicke von 1 µm bis 12 µm, bevorzugt von 2 µm bis 8 µm und besonders bevorzugt von 4 µm bis 6 µm aufweist.

10. Sicherheitselement nach wenigstens einem der Ansprüche 5 bis 9, **dadurch gekennzeichnet, dass** das Sicherheitsmerkmal ein Material umfasst, das ausgewählt ist aus der Gruppe der Metalle, Metallverbindungen, Legierungen, Metalllacke, Metalltinten, metallisch erscheinenden Lacke, und/ oder das Sicherheitsmerkmal ein elektrisch leitfähiges oder magnetisches Material umfasst.

11. Sicherheitselement nach wenigstens einem der Ansprüche 5 bis 10, **dadurch gekennzeichnet, dass** das Sicherheitsmerkmal Pigmente, bevorzugt Flüssigkristallpigmente oder optisch variable Interferenzpigmente, einen optisch variablen Dünnschichtaufbau, insbesondere einen drei- oder mehrschichtigen Dünnschichtaufbau, eine Beugungsstruktur, eine Anordnung von Mikrolinsen, Mikrospiegeln und/ oder Mikroaufdrucken aufweist.

12. Sicherheitselement nach wenigstens einem der Ansprüche 5 bis 11, **dadurch gekennzeichnet, dass** das Sicherheitselement im Randbereich durch geeignete Strahlführung bei der Laserbeaufschlagung nicht geradlinig, insbesondere mäanderförmig, geschwungen oder gezackt begrenzt sind.

13. Datenträger, insbesondere Sicherheitspapier oder Wertdokument, mit einem Sicherheitselement nach einem der Ansprüche 1 bis 12.

## Claims

1. A method for manufacturing a security element for security papers, value documents and other data carriers, in which
- a planar foil web is supplied which has a first foil ply, a second foil ply arranged over the first foil ply and at least one security feature arranged between the first and second foil ply and extending substantially over the entire area of the foil web,
- the foil web is subjected to laser radiation such that the foil web is cut through completely in the pre-specified dimensions of the security element and at the same time the first and second foil ply are interconnected in an edge region of the security element detached from the foil web,
- the first and second foil ply of the security element are interconnected substantially fluid-tightly, namely welded together,
**characterized in that**
- the foil plies in the edge region are interconnected such that a thickening is formed whose dimension in a direction perpendicular to the plane of the security element is preferably 1% to 100% greater than the average thickness of the security element.

2. The method according to claim 1, **characterized in that** the planar foil web is supplied in an endless method as an endless foil and the security element is created as an endless foil, in particular as an endless safety thread.

3. The method according to at least one of claims 1 or 2, **characterized in that** the lasering is effected with a plurality of laser beams and a plurality of security elements is created from the foil web in a method step.

4. The method according to at least one of claims 1 to 3, **characterized in that** the lasering is effected with an infrared laser in the wavelength region of 3 µm to 12 µm, preferably from 9.2 µm to 10.6 µm, in particular by a CO₂ laser.

5. A security element for securing security papers, value documents and other data carriers, manufactured according to any of claims 1 to 4, having
- a first foil ply, a second foil ply arranged over the first foil ply and at least one security feature arranged between the first and second foil ply,
- wherein the first and second foil ply are interconnected in an edge region of the security element by means of lasering,
- the connections of the first and second foil ply of the security element is fluid-tight, **characterized in that**
- the connection of the first and second foil ply is a thickening whose dimension in a direction perpendicular to the plane of the security element is preferably 1% to 100% greater than the average thickness of the security element.

6. The security element according to claim 5, **characterized in that** the first and/or the second foil ply is a polymeric material, in particular a plastic foil made of PET, PP, PE, LDPE, LLDPE, PA, PC, BOPP, PVC, PU, UV cross-linking lacquer layers or natural biopolymers.

7. The security element according to at least one of claims 5 or 6, **characterized in that** the first and/or the second foil ply is a translucent or transparent foil.

8. The security element according to at least one of claims 5 to 7, **characterized in that** the first foil ply has a thickness of 10 µm to 20 µm, preferably 12 µm to 15 µm.

9. The security element according to at least one of claims 5 to 8, **characterized in that** the second foil ply has a thickness of 1 µm to 12 µm, preferably 2 µm to 8 µm and particularly preferably from 4 µm to 6 µm.

10. The security element according to at least one of claims 5 to 9, **characterized in that** the security feature comprises a material which is selected from the group of the metals, metal compounds, alloys, metal lacquers, metal inks, metallic-appearing lacquers, and/or the security feature comprises an electrically conductive or magnetic material.

11. The security element according to at least one of claims 5 to 10, **characterized in that** the security feature has pigments, preferably liquid-crystal pigments or optically variable interference pigments, an optically variable thin-film construction, in particular a three-layer or multilayer thin-film construction, a diffractive structure, an arrangement of microlenses, micromirrors and/or microimprinting.

12. The security element according to at least one of claims 5 to 11, **characterized in that** the security element in the edge region is limited by suitable beam control upon the lasering in a non-straight, in particular meandering, wavy or jagged way.

13. A data carrier, in particular a security paper or value document, having a security element according to any of claims 1 to 12.

## Revendications

1. Procédé de fabrication d'un élément de sécurité pour papiers de sécurité, documents de valeur et autres supports de données, dans lequel :
- une bande de film en feuille est mise à disposition, laquelle comporte une première strate de film, une deuxième strate de film agencée par-dessus la première strate de film, et au moins une caractéristique de sécurité agencée entre la première et la deuxième strate de film et s'étendant essentiellement sur toute la surface de la bande de film,
- la bande de film est soumise de telle façon à un rayonnement laser que la bande de film est entièrement découpée aux dimensions prédéterminées de l'élément de sécurité et que, en même temps, la première et la deuxième strate de film sont jointes entres elles dans une zone de bordure de l'élément de sécurité détaché de la bande de film,
- la première et la deuxième strate de film de l'élément de sécurité sont jointes entres elles de manière essentiellement étanche aux liquides, à savoir soudées entres elles,
**caractérisé en ce que**
- les strates de film en zone de bordure sont jointes entres elles de telle façon qu'une surépaisseur est engendrée, dont la dimension, dans un sens perpendiculaire au plan de l'élément de sécurité, est de préférence supérieure de 1 % à 100 % à l'épaisseur moyenne de l'élément de sécurité.

2. Procédé selon la revendication 1, **caractérisé en ce que** la bande de film en feuille est mise à disposition en mode continu sous forme de film sans fin, et que l'élément de sécurité est produit sous forme de film sans fin, en particulier sous forme de fil de sécurité sans fin.

3. Procédé selon au moins une des revendications 1 ou 2, **caractérisé en ce que** la soumission au laser a lieu par une pluralité de rayons laser et que, à partir de la bande de film, lors d'une étape du procédé, une pluralité d'éléments de sécurité est produite.

4. Procédé selon au moins une des revendications de 1 à 3, **caractérisé en ce que** la soumission au laser a lieu avec un laser infrarouge dans une plage de longueurs d'ondes comprise entre 3 µm et 12 µm, de préférence entre 9,2 µm et 10,6 µm, en particulier avec un laser CO₂.

5. Elément de sécurité destiné à la sécurisation de papiers de sécurité, documents de valeur et autres supports de données, fabriqué selon une des revendications de 1 à 4, ayant
- une première strate de film, une deuxième strate de film agencée par-dessus la première strate de film, et au moins une caractéristique de sécurité agencée entre la première et la deuxième strate de film,
- cependant que la première et la deuxième strate de film sont jointes entres elles dans une zone de bordure de l'élément de sécurité par soumission au laser,
- la jonction de la première et la deuxième strate de film de l'élément de sécurité est étanche aux liquides,
**caractérisé en ce que**
- la jonction de la première et de la deuxième strate de film est une surépaisseur dont la dimension, dans un sens perpendiculaire au plan de l'élément de sécurité, est de préférence supérieure de 1 % à 100 % à l'épaisseur moyenne de l'élément de sécurité.

6. Procédé selon la revendication 5, **caractérisé en ce que** la première et/ou la deuxième strate de film est un matériau polymère, en particulier un film de matière plastique en PET, PP, PE, LDPE, LLDPE, PA, PC, BOPP, PVC, PU, couches de vernis réticulant aux UV ou biopolymères naturels.

7. Procédé selon au moins une des revendications 5 ou 6, **caractérisé en ce que** la première et/ou la deuxième strate de film est un film translucide ou transparent.

8. Procédé selon au moins une des revendications de 5 à 7, **caractérisé en ce que** la première strate de film présente une épaisseur comprise entre 10 µm et 20 µm, de préférence entre 12 µm et 15 µm.

9. Procédé selon au moins une des revendications de 5 à 8, **caractérisé en ce que** la deuxième strate de film présente une épaisseur comprise entre 1 µm et 12 µm, de préférence entre 2 µm et 8 µm, et particulièrement de préférence entre 4 µm et 6 µm.

10. Elément de sécurité selon au moins une des revendications de 5 à 9, **caractérisé en ce que** la caractéristique de sécurité comprend un matériau choisi dans le groupe des métaux, composés métalliques, alliages, vernis métalliques, encres métalliques, vernis d'aspect métallique, et/ou **en ce que** la caractéristique de sécurité comprend un matériau électriquement conducteur ou magnétique.

11. Elément de sécurité selon au moins une des revendications de 5 à 10, **caractérisé en ce que** la caractéristique de sécurité comporte des pigments, de préférence des pigments cristaux liquides ou des pigments d'interférence optiquement variables, une structure en couche mince optiquement variable, en particulier une structure en couche mince à trois couches ou multicouche, une structure de diffraction, un agencement de microlentilles, micro-miroirs et/ou micro-impressions.

12. Elément de sécurité selon au moins une des revendications de 5 à 11, **caractérisé en ce que** l'élément de sécurité est, dans la zone de bordure, par un guidage adapté du faisceau lors de la soumission au laser, limité de façon non linéaire, en particulier en méandres, de façon sinueuse ou dentelée.

13. Support de données, en particulier papier de sécurité ou document de valeur, comportant un élément de sécurité selon une des revendications de 1 à 12.
